(19) Europäisches Patentamt
European Patent Office
Office européen des brevets

(11) **EP 3 092 156 B1**

(12) **EUROPÄISCHE PATENTSCHRIFT**

(45) Veröffentlichungstag und Bekanntmachung des Hinweises auf die Patenterteilung:
**13.03.2019 Patentblatt 2019/11**

(21) Anmeldenummer: **15702138.7**

(22) Anmeldetag: **06.01.2015**

(51) Int Cl.:
***B60R 21/21*** *(2011.01)*

(86) Internationale Anmeldenummer:
**PCT/EP2015/050092**

(87) Internationale Veröffentlichungsnummer:
**WO 2015/104258 (16.07.2015 Gazette 2015/28)**

(54) **GASSACKANORDNUNG UND VERFAHREN ZUR HERSTELLUNG EINER GASSACKANORDNUNG**

AIRBAGMODULE AND METHOD OF MANUFACTURE OF AN AIRBAGMODULE

ENSEMBLE DE SAC GONFLABLE ET PROCÉDÉ DE FABRICATION D'UN ENSEMBLE DE SAC GONFLABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.01.2014 DE 102014200252**

(43) Veröffentlichungstag der Anmeldung:
**16.11.2016 Patentblatt 2016/46**

(73) Patentinhaber: **Joyson Safety Systems Germany GmbH**
**63743 Aschaffenburg (DE)**

(72) Erfinder:
• WEYRICH, Christian
89275 Elchingen (DE)
• KORTH, Mirko
89075 Ulm (DE)

(74) Vertreter: **Maikowski & Ninnemann Patentanwälte Partnerschaft mbB**
**Postfach 15 09 20**
**10671 Berlin (DE)**

(56) Entgegenhaltungen:
WO-A1-2011/073445      WO-A1-2012/059522
DE-T2- 60 309 153       US-A1- 2007 108 752

**Beschreibung**

Die Erfindung betrifft eine Gassackanordnung gemäß dem Oberbegriff des Patentanspruchs 1 und ein Verfahren zur Herstellung einer solchen Gassackanordnung.

Die fortschreitende Entwicklung in den Bereichen Sensorik erlaubt es, Unfallereignisse bereits vor ihrem Stattfinden mit hoher Wahrscheinlichkeit vorauszusagen. Dies erlaubt die Auslösung von Insassen-Schutzsystemen bereits vor dem Beginn des Unfallereignisses mit der Zielsetzung, dem Insassen durch den früheren Wirkbeginn mehr Schutz bereitzustellen. Beispielsweise ist es hierzu bekannt, Luft in einen Lehnenbereich eines Fahrzeugsitzes zu leiten, um den Fahrzeuginsassen in günstiger Weise zu positionieren, bevor die Auslösung des eigentlichen Standard-Gassacks erfolgt.

Aufgrund der eingeschränkten Platzverhältnisse in einem Fahrzeugsitz ist es teilweise notwendig, den Einbauort der Gasquelle vom Gassack zu trennen. Dementsprechend ist es erforderlich, das Gas z. B. durch einen Schlauch bis zum Gassack zu leiten und dabei zu vermeiden, dass durch die Anbindung der Gasquelle eine zusätzliche Leckage entsteht. Dies ist umso wichtiger, als die Leistung der verwendeten Gasquelle bei einer Pre-Crash-Sensorik häufig geringer ist als die Leistung einer Gasquelle, die mit einem Standard-Gassack mit In-Crash-Auslösung bereitgestellt wird.

Es besteht somit ein Bedarf nach Lösungen, einen Schlauch oder ein anderes Befüllmittel, dessen eines Ende mit einer Gasquelle verbunden ist, mit seinem anderen Ende luftdicht und dauerhaft mit einem Gassack zu verbinden. Dies erfolgt idealerweise mit einfachen Mitteln und mit Resistenz gegen Fertigungstoleranzen.

Das Problem der Vermeidung von Leckagen bei der Verbindung einer Gasquelle mit einem Gassack stellt sich auch bei anderen Luftsäcken, beispielsweise auch bei Luftsäcken eines Standard-Airbagsystems. Es besteht ein Bedarf nach technischen Lösungen, wie eingebrachte Schläuche, Rohre, angeflanschte oder eingeschobene Gasgeneratoren, Diffusoren und ähnliche Bauteile mit einem Gassack ohne Leckage verbunden werden können. Hierzu ist es aus der US 2005/0134022 A1 bekannt, einen Gasgenerator in einen Aufnahmestutzen eines Gassacks einzuführen und mittels einer Schelle fest mit dem Aufnahmestutzen zu verbinden. Aus der DE 10 2010 040 119 A1 ist es bekannt, einen Gasgenerator in einer Tasche eines Gassacks einzulegen und dabei so zu positionieren, dass ausströmende Luft über eine im Bereich der Tasche angeordnete Öffnung in das Gassackinnere strömt.

Des Weiteren offenbart die WO 2011/073445 A1 einen Gassack mit zwei durch einen Kleber mit einander verbundenen Übergangsabschnitten, die einen abgedichteten Strömungskanal zwischen zwei Gassacksegmenten bilden. Die DE 603 09 153 beschreibt einen Gassack mit einem in Öffnungen des Gassacks hineinragenden Verbinder, mit dem eine gasdichte Verbindung zwischen den Öffnungen hergestellt wird.

Weiter ist es bekannt, im Querschnitt kreisförmige Teile wie Schläuche oder Rohre in einen offenen Kanal eines Befüllrüssels eines Gassacks einzuschieben und mit Schellen am Befüllrüssel so zu befestigen, dass eine dichte Verbindung entsteht. Ein Problem dabei besteht darin, dass solche Kanäle, die üblicherweise durch Silikonspuren bereitgestellt werden, mit Fertigungstoleranzen versehen sein können, die eine belastbare gasdichte Verbindung erschweren. Darüber hinaus können im Falle kleiner Befüllschläuche kleine Schellen nur relativ geringe Kräfte aufbringen, so dass die Verbindung zwischen Gassack und Gasanschluss häufig nicht ausreichend dicht und stabil gegen ein Herausziehen ausgeführt werden kann.

Der vorliegenden Erfindung liegt dementsprechend die Aufgabe zugrunde, eine Gassackanordnung bereitzustellen, die in einfacher Weise und mit Resistenz gegenüber Fertigungstoleranzen eine gasdichte Verbindung eines Befüllmittels mit einem Gassack ermöglicht. Des Weiteren soll ein Verfahren zur Herstellung einer solchen Gassackanordnung bereitgestellt werden.

Diese Aufgabe wird erfindungsgemäß durch eine Gassackanordnung mit den Merkmalen des Anspruchs 1 und ein Verfahren mit den Merkmalen des Anspruchs 9 gelöst. Ausgestaltungen der Erfindung sind in den Unteransprüchen angegeben.

Danach zeichnet sich die erfindungsgemäße Lösung dadurch aus, dass ein Befüllmittel, beispielsweise ein Befüllschlauch, ein Befüllrohr oder ein Gasgenerator, in einer Öffnung eines Gassacks durch ein elastisches Haltemittel, das im Bereich dieser Öffnung im Gassack angeordnet ist, elastisch gehalten wird. Die Halterung erfolgt durch Ausüben von elastischen Haltekräften auf das Befüllmittel durch das Haltemittel.

Das Haltemittel ist als Klebemittel ausgebildet und kann in Form eines Elastomers bereitgestellt sein. Die erfindungsgemäße Lösung macht sich dabei zu Nutze, dass ein Klebemittel (z.B. Silikon) elastische Eigenschaften aufweist und aufgrund dieser elastischen Eigenschaften dazu geeignet ist, Haltekräfte auf ein Befüllmittel auszuüben. Dabei ist vorgesehen, dass das Klebemittel das Befüllmittel zumindest teilweise umgibt und in radialer Richtung Haltekräfte auf das Befüllmittel ausübt. Aufgrund der elastischen Eigenschaften des Klebemittels ist die Verbindung darüber hinaus luftdicht und dauerhaft. Die Kraft der umschließenden Klebemittelflächen auf das Befüllmittel sorgt für eine relativ hohe Reibkraftverbindung, so dass das Befüllmittel weder vom Innendruck noch von außen wirkenden Zugkräften her ohne Weiteres aus der Verbindung herausgeschoben oder gezogen werden kann. Je länger der Abschnitt des Befüllmittels ist, den das Klebemittel umschließt, desto höher ist naturgemäß die Verbindungskraft zwischen Befüllmittel und Klebemittel.

Der Gassack kann insbesondere einen Innenraum definieren, der zum Aufblasen des Gassacks mit Gas befüllbar ist. Die Öffnung des Gassacks, in der das Befüllmittel angeordnet ist, kann eine Verbindung des Innenraums des Gassacks mit einer äußeren Umgebung des Gassacks bereitstellen.

Das Klebemittel wird gemäß der Erfindung durch mindestens eine Klebemittelspur bereitgestellt, die zwischen zwei oder mehr Gassacklagen des Gassacks angeordnet ist. Eine solche Klebemittelspur verbindet somit mindestens zwei Gassacklagen des Gassacks. Die Verwendung solcher Klebemittelspuren zur Verbindung zweier Gassacklagen ist an sich bekannt. Die erfindungsgemäße Lösung macht sich zu Nutze, dass eine solche Klebemittelspur für sich genommen (bei Ausbildung einer entsprechenden Öffnung in ihr) oder zwei benachbarte Klebemittelspuren, die zwischen sich einen Einführkanal ausbilden, geeignet sind, elastische Kräfte auf ein längliches Befüllmittel auszuüben, das durch eine Klebemittelspur oder in einen zwischen zwei benachbarten Klebemittelspuren ausgebildeten Einführkanal hineingeschoben wird.

Dabei ist es naturgemäß notwendig, dass der Durchmesser des Befüllmittels derart bemessen ist, dass bei seinem Schieben durch eine Klebemittelspur oder bei seinem Einschieben in einen Einführkanal das Halteoder Klebemittel geweitet und nach außen gedrängt wird, so dass es in radialer Richtung Haltekräfte auf das Befüllmittel ausübt.

Gemäß einer Ausgestaltung der Erfindung wird das Befüllmittel in einem Anschlussbereich des Gassacks elastisch durch das Halte- oder Klebemittel gehalten. Ein solcher Anschlussbereich wird beispielsweise durch einen Rüssel bereitgestellt, der im flach ausgebreiteten Zustand des Gassacks im Wesentlichen rechteckförmig ist, wobei die zwei Längskanten des Rüssels jeweils eine Klebemittelspur aufweisen, die zwischen sich einen Einführkanal definieren.

Wie bereits erwähnt, handelt es sich bei dem Klebemittel beispielsweise um Silikon. Die Verwendung von Silikon als Klebemittel ist vorteilhaft, da das Dehnungsvermögen von Silikon sehr ausgeprägt sein kann und beispielsweise bei 1000 % oder sogar höher liegt, d. h. das Silikonmaterial kann bis auf seine zehnfache Ausdehnung gezogen werden, bis es einreißt. Grundsätzlich können jedoch auch andere Klebemittel mit elastischen Eigenschaften eingesetzt werden.

Die elastischen Haltekräfte, die das Halte- oder Klebemittel auf das Befüllmittel ausübt, sodass das Befüllmittel in der Öffnung des Gassacks gehalten wird, können zu einer kraftschlüssigen Halterung des Befüllmittels in der Öffnung führen. Insbesondere kann die Halterung des Befüllmittels in der Öffnung des Gassacks durch die elastischen Haltekräfte des Haltemittels erfolgen, ohne dass dabei eine Klebverbindung zwischen dem Befüllmittel und der Gassackanordnung, insbesondere dem Klebemittel, besteht.

Die Erfindung stellt des Weiteren ein Verfahren zur Herstellung einer Gassackanordnung bereit. Das Verfahren umfasst die Schritte:

- Bereitstellen eines Gassacks, der zumindest in einem Teilbereich mindestens ein zwischen zwei oder mehreren Gassacklagen angeordnetes Haltemittel in Form eines Klebemittels aufweist, das durch eine ausgehärtete Klebemittelspur bereitgestellt ist,
- Schieben eines länglichen Befüllmittels durch die mindestens eine Klebemittelspur oder in einen mittels der mindestens einen Klebemittelspur gebildeten elastisch verformbaren Einführkanal, wobei das Befüllmittel Klebemittel der mindestens einen Klebemittelspur verdrängt und das Klebemittel eine elastische Haltekraft auf das Befüllmittel ausübt.

Dementsprechend sieht das erfindungsgemäße zur Herstellung einer solchen Gassackanordnung zwei Varianten vor. Gemäß der ersten Variante wird ein Befüllmittel durch eine Klebemittelspur hindurch geschoben, wobei dieses Hindurchschieben in einer Richtung senkrecht zur Klebemittelspur erfolgen kann. Die Klebemittelspur für sich genommen, d. h. ohne die Notwendigkeit des Zusammenwirkens mit einer weiteren Klebemittelspur, stellt dabei eine elastische Haltekraft auf das Befüllmittel bereit.

Gemäß der zweiten Variante des erfindungsgemäßen Verfahrens ist dagegen vorgesehen, dass die elastische Haltekraft durch einen elastisch verformbaren Einführkanal bereitgestellt wird, der durch mindestens eine Klebemittelspur gebildet ist. Es wird somit mit dem Klebemittel ein Kanal für das Befüllmittel definiert. Bei Einschieben des Befüllmittels in diesen Kanal wird das Klebemittel verdrängt und übt hierdurch eine elastische Haltekraft auf das Befüllmittel aus.

Bei beiden Varianten des erfindungsgemäßen Verfahrens wird Klebemittel mindestens einer Klebemittelspur durch das Einführen des Befüllmittels aus seiner Ausgangsposition verdrängt. Aufgrund der elastischen Eigenschaften des Klebemittels versucht dieses, in seiner Ausgangsposition zurückzukehren und übt dadurch eine elastische Haltekraft auf das Befüllmittel aus.

Wie bereits angemerkt, sieht eine Ausgestaltung der Erfindung vor, dass das Befüllmittel durch eine Klebemittelspur hindurch geschoben wird. Dies kann gemäß einer ersten Verfahrensmethode dadurch erfolgen, dass das Befüllmittel durch eine sich zwischen zwei oder mehreren Gassacklagen befindliche geschlossene und bereits ausgehärtete Klebemittelspur gestoßen wird. Das dadurch radial nach außen verdrängte Klebemittel umschließt den eingeschlossenen Gegenstand und dichtet die Verbindung über seine elastischen Eigenschaften luftdicht und dauerhaft ab. Die umschließende Kraft auf den eingeschlossenen Gegenstand sorgt auch für eine hohe Reibverbindung, so dass das Befüllmittel weder vom Innendruck noch von außen wirkenden Zugkräften aus der Verbindung geschoben oder gezogen werden kann.

Bei dieser Verfahrensmethode erfolgt das Schieben des Befüllmittels durch die Klebemittelspur somit, ohne dass ein Einschnitt oder dergleichen zuvor in der Klebemittelspur vorgenommen würde. Diese reißt vielmehr bei Schieben des Befüllmittels durch die Klebemittelspur mittig auf, wobei das Klebemittel konzentrisch nach außen gedrängt wird.

Allerdings kann vorgesehen sein, dass ein Dorn oder dergleichen stirnseitig an dem Befüllmittel angeordnet ist, der das Durchschieben des Befüllmittels durch die Klebemittelspur vereinfacht. Ein solcher Dorn kann nach fertiger Platzierung des Befüllmittels wieder entfernt werden, beispielsweise durch Herausziehen des Dorns über einen Hohlzylinder des Befüllmittels.

Gemäß einer zweiten Verfahrensmethode wird das Befüllmittel zwar ebenfalls durch eine Klebemittelspur hindurch geschoben, jedoch wird hierzu zuvor mittels eines Werkzeugs ein Einschnitt in die Klebemittelspur vorgenommen. Ein solcher Einschnitt erfolgt beispielsweise durch ein schwertähnliches Werkzeug, das einen länglichen Einschnitt in der Klebemittelspur bereitstellt. Nach Anbringen des Einschnitts wird das Befüllmittel durch den sich dabei weitenden Einschnitt bis in das Innere des Gassacks geschoben. Bei dieser Verfahrensmethode ist somit vorgesehen, vor der Durchführung des Befüllmittels durch eine geschlossene Klebemittelspur ein spezielles Werkzeug durch die bereits ausgehärtete Klebemittelspur zu schieben, um diese vor der Montage des Befüllmittels zu öffnen. Durch diesen Einschnitt wird anschließend das Befüllmittel nach dem Entfernen des Werkzeugs geschoben. Der sich aus dem Einschub des Werkzeugs ergebende Umfang des Öffnungsmundes ist dabei kleiner als der Umfang des einzuschiebenden Befüllmittels. Diese Variante eignet sich insbesondere für die Durchführung von Befüllmitteln mit vergleichsweise großem Durchmesser, beispielsweise von Durchmessern größer als 8 mm.

Gemäß einer weiteren Ausgestaltung des erfindungsgemäßen Verfahrens wird in einem Anschlussbereich des Gassacks ein elastisch verformbarer Einführkanal genau definierten Durchmessers zur Aufnahme des Befüllmittels bereitgestellt. Dieser Erfindungsaspekt sieht somit vor, dass zunächst ein elastischer Einführkanal genau definierten Durchmessers erzeugt wird, in den dann anschließend das Befüllmittel eingebracht werden kann. Der Durchmesser des bereitgestellten Kanals ist dabei geringer als der Durchmesser des Befüllmittels, so dass bei Einführen des Befüllmittels in den Kanal Klebemittel nach außen gedrängt wird und eine elastische Haltekraft auf das Befüllmittel ausübt.

Zur Bereitstellung des Einführkanals genau definierten Durchmessers ist vorgesehen, in dem Anschlussbereich auf eine untere Gassacklage mindestens eine Klebemittelspur aufzubringen. In diese Klebemittelspur oder, sofern mehrere Klebemittelspuren vorgesehen sind, zwischen diese (z.B. parallel zueinander verlaufende) Klebemittelspuren wird im nassen Zustand des Klebemittels ein Inlay eingelegt, das typischerweise flach ausgebildet ist. Anschließend wird mindestens eine obere Gassacklage des Gassacks aufgebracht. Die Anordnung kann dann auf die gewünschte Silikonspurhöhe gepresst werden. Anschließend härtet das Klebemittel aus.

Nach Aushärten des Klebemittels ist gemäß einer Erfindungsvariante vorgesehen, dass das eingelegte Inlay nun entfernt wird. Nach Entfernen des Inlays verbleibt ein definierter Einführkanal, der durch Klebemittelmaterial der mindestens einen Klebemittelspur gebildet und daher elastisch ist. Die exakte Bereitstellung dieses Kanals erfolgt auch im Falle extrem großer Toleranzen der Klebemittelspur aufgrund des geschilderten Herstellungsverfahrens, bei dem das Inlay in das noch nasse Klebemittel eingelegt wird. Beispielsweise ist das Inlay von allen Seiten zumindest abschnittsweise mit Klebemittel umgeben und wird nach Aushärten den Klebemittels entfernt, wobei ein an allen Seiten durch Klebemittel gebildeter Einführkanal verbleibt.

Alternativ kann vorgesehen sein, dass das Inlay an Ort und Stelle verbleibt und nicht entfernt wird. Für diesen Fall ist vorgesehen, dass das (z.B. innen hohle) Inlay aus einem elastischen Material besteht, beispielsweise aus dem gleichen Material wie die Klebemittelschicht und sich vollständig mit der Klebemittelschicht verbindet. Das Inlay stellt insofern einen Teil der Klebemittelschicht bereit.

Eine Ausgestaltung der Erfindung sieht vor, dass in dem Anschlussbereich auf die untere Gassacklage mindestens zwei parallel zueinander verlaufende Klebemittelspuren aufgebracht werden. Zwischen diese wird dann in noch nassem Zustand des Klebemittels das Inlay eingelegt, wobei die den jeweiligen Klebemittelspuren zugewandten Seitenflächen des Inlays mit dem Klebemittel der jeweiligen Klebemittelspur benetzt sind, so dass nach Aushärten und Entfernen des Inlays ein definierter Einführkanal vorliegt, unabhängig von eventuellen Toleranzen der Klebemittelspur.

Das Einführen des Befüllmittels kann beispielsweise mittels eines pneumatischen Kolbens erfolgen, der das Befüllmittel in eine verengte Klebemittelspur schiebt.

Weiter kann vorgesehen sein, dass zur Erhöhung der Verbindungskraft und der Dichtigkeit zusätzlich Kabelbinder, Schellen, Schrumpfschläuche oder dergleichen im Bereich des Befüllanschlusses eingesetzt werden. Diese bewirken eine zusätzliche Haltekraft, die zusätzlich zu der durch das Klebemittel erfindungsgemäß bereitgestellten Haltekraft wirkt. Insbesondere bei kleinen Kanalbreiten kann auf solche zusätzlichen Verbindungsmittel auch verzichtet werden.

Je länger bzw. tiefer der Bereich ist, in dem das Befüllmittel von Klebemittel umschlossen ist, desto höher ist die Verbindungskraft zwischen Einschubteil und Gassack, wobei dieser Zusammenhang näherungsweise linear ist. Die Verbindungskraft, die durch das elastische Verdrängen des Klebemittels bereitgestellt wird, kann dadurch maximiert werden, dass der Kanal so eng ausgelegt ist, dass beim Einschieben des Befüllmittels das Klebemittel bis an oder auch über die Dehnungsgrenze hinaus belastet wird. Dadurch adaptiert sich die minimale Kanal-Öffnungsbreite der Klebemittelspur selbsttätig zu einer optimierten Geometrie. Die Fügerichtung erfolgt parallel zu den durch die Klebemittelspur miteinander verklebten Gassack-Hauptlagen.

Das Befüllmittel kann in der Öffnung des Gassacks durch die elastischen Haltekräfte des Klebemittels kraftschlüssig gehalten werden. Insbesondere kann die Halterung des Befüllmittels in der Öffnung des Gassacks durch die elastischen Haltekräfte des Klebemittels erfolgen, ohne dass dabei eine Klebverbindung zwischen dem Befüllmittel und der Gassackanordnung (insbesondere dem Klebemittel) hergestellt wird. Die Entstehung einer Klebeverbindung kann beispielsweise verhindert werden, indem das Befüllmittel erst nach Aushärten des Klebemittels mit diesem in Berührung gebracht wird.

Die Erfindung wird nachfolgend unter Bezugnahme auf die Figuren der Zeichnung anhand mehrerer Ausführungsbeispiele näher erläutert. Es zeigen:

Fig. 1A - 1D     Verfahrensschritte einer ersten Ausführungsvariante eines erfindungsgemäßen Verfahrens zur Herstellung einer Gassackanordnung;

Fig. 2A, 2B     eine Abwandlung der ersten Ausführungsvariante des Verfahrens bei Verwendung von Befüllmitteln mit kleinen Durchmessern;

Fig. 3A - 3D     Schnittdarstellungen durch ein Klebemittel und ein in diesem angeordnetes Befüllmittel zur Erläuterung der physikalischen Hintergründe der ersten Ausführungsvariante des Verfahrens;

Fig. 4A, 4B     eine zweite Abwandlung der ersten Ausführungsvariante des erfindungsgemäßen Verfahrens;

Fig. 5A, 5B     eine dritte Abwandlung der ersten Ausführungsvariante des erfindungsgemäßen Verfahrens;

Fig. 6A, 6B     eine vierte Abwandlung der ersten Ausführungsvariante des erfindungsgemäßen Verfahrens;

Fig. 7A, 7B     eine fünfte Abwandlung der ersten Ausführungsvariante des erfindungsgemäßen Verfahrens;

Fig. 8A, 8B     eine sechste Abwandlung der ersten Ausführungsvariante des erfindungsgemäßen Verfahrens;

Fig. 9A, 9B     eine siebte Abwandlung der ersten Ausführungsvariante des erfindungsgemäßen Verfahrens;

Fig. 10A - 10D     Verfahrensschritte einer zweiten Ausführungsvariante eines erfindungsgemäßen Verfahrens zur Herstellung einer Gassackanordnung;

Fig. 11A - 11D     Schnittdarstellungen durch ein Klebemittel und ein in diesem angeordnetes Befüllmittel zur Erläuterung der physikalischen Hintergründe der zweiten Ausführungsvariante des Verfahrens;

Fig. 12A, 12B     eine erste Abwandlung der zweiten Ausführungsvariante des erfindungsgemäßen Verfahrens;

Fig. 13A, 13B     eine zweite Abwandlung der zweiten Ausführungsvariante des erfindungsgemäßen Verfahrens;

Fig. 14A, 14B     eine dritte Abwandlung der zweiten Ausführungsvariante des erfindungsgemäßen Verfahrens;

Fig. 15A-15D     Verfahrensschritte einer dritten Ausführungsvariante eines erfindungsgemäßen Verfahrens zur Herstellung einer Gassackanordnung;

Fig. 16A     eine schematische Darstellung eines Kraft-Weg-Diagrammes einer Zugkraftmessung an einem elastisch in einer Öffnung eines Gassacks gehaltenen Befüllmittel;

Fig. 16B     eine schematische Darstellung eines Kraft-Weg-Diagrammes einer Zugkraftmessung an einem in einer Öffnung eines Gassacks verklebten Befüllmittel; und

Fig. 17     eine Öffnung eines Gassacks nach Abziehen eines zuvor mit der Öffnung verklebten Befüllmittels.

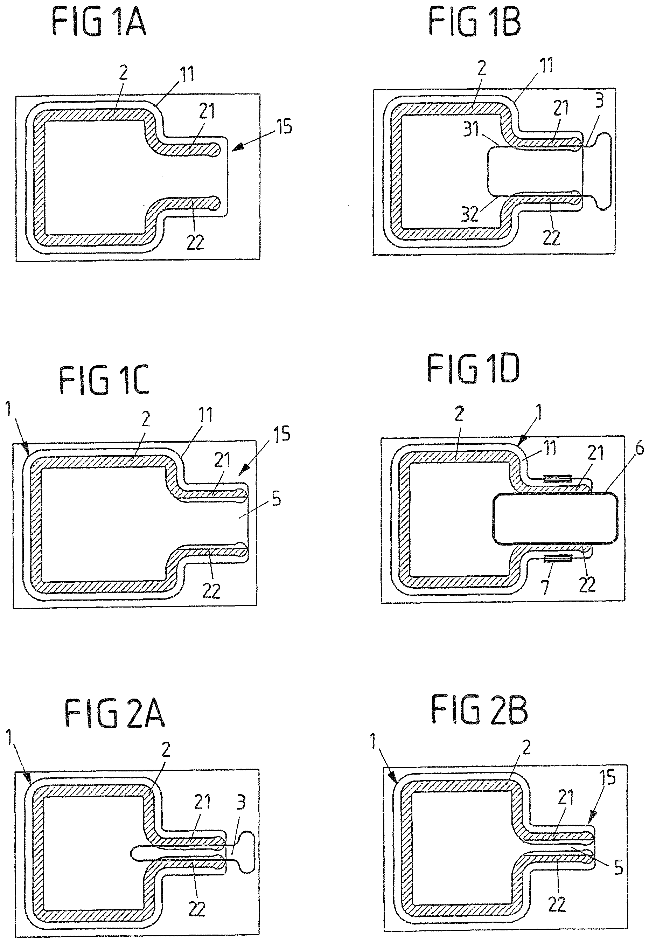

Die Figuren 1A bis 1D zeigen schematisch die Bereitstellung eines Einführkanals definierten Durchmessers in einem Befüllrüssel eines Gassacks sowie das Anordnen eines Befüllmittels in einem solchen Einführkanal.

In einem ersten Schritt wird gemäß der Figur 1A auf eine flach ausgebreitete Gassacklage 11 eine Silikonspur 2 aufgebracht. Die Gassacklage 11 umfasst einen rüsselförmigen Anschlussbereich 15, der der Aufnahme und Anordnung eines Befüllmittels dient. Im Anschlussbereich 15 bildet die Silikonspur 2 zwei im Wesentlichen parallele Arme 21, 22, die nachfolgend auch als parallele Silikonspuren bezeichnet werden, aus. Statt aus Silikon kann die Spur 2 auch aus einem anderen elastischen Klebemittel bestehen. Die Erläuterung der Erfindung mit Silikon als Klebemittel ist insofern nur beispielhaft zu verstehen.

Anschließend wird ein flaches Inlay 3 in das nasse Silikon eingelegt, wie in der Figur 1B dargestellt. Das Inlay 3 ist dabei derart ausgebildet, dass seine seitlichen Begrenzungsflächen 31, 32 in den Bereichen, die parallel zu den Armen 21, 22 der Silikonspur 2 verlaufen, unmittelbar an die Silikonspur 2 angrenzen und von dem angrenzenden Silikon benetzt werden, auch wenn die Silikonspur 2 mit Fertigungstoleranzen auf der Gassacklage 11 platziert wird. Die Silikonspur 2 und das Inlay 3 sind also derart ausgelegt, dass die Silikonspur in jedem Toleranzfall die Ränder 31, 32 des Inlays 3 erreicht.

Weiter wird eine obere Gassacklage bzw. ein oberer Gewebezuschnitt auf die untere Gassacklage 11 aufgelegt. Anschließend wird die dabei entstehende Anordnung auf die gewünschte Silikonspurhöhe gepresst. Die obere Gassacklage ist für eine bessere Übersichtlichkeit der Darstellung nicht gesondert dargestellt. Nach Aushärten sind die obere Gassacklage und die untere Gassacklage 11 entlang ihres Randbereiches mittels der Silikonspur 2, die sich entlang des gesamten Umfangs des nun entstandenen Gassacks 1 erstreckt, miteinander verbunden.

Nach Aushärten des Silikons wird das Inlay 3 entnommen, vgl. Figur 1C. Der dabei entstehende Einführkanal 5 besitzt genau die Öffnungsbreite des Inlays 3. Der Einführkanal 5 stellt eine Öffnung des Gassacks 1 bereit, über die Gas zur Befüllung des Gassacks 1 in diesen eingefüllt werden kann.

In den auf diese Weise sehr präzise gefertigten Einführkanal 5, der zwischen den beiden Silikonspuren 21, 22 verläuft und an diese angrenzt, wird nun gemäß der Figur 1D ein Befüllmittel 6 definiert eingeführt, das der der Befüllung des Gassacks 1 mit Gas dient. Bei dem Befüllmittel 6 handelt es sich beispielsweise um einen Schlauch, ein Rohr, einen Gasgenerator oder ein Ventil. Das Befüllmittel 6 wird dabei parallel zu den Gewebelagen 11 durch den Einführkanal 5 eingeschoben, der einen geringeren Durchmesser aufweist als das Befüllmittel 6. Hierdurch kann die Elastizität des Silikons genutzt werden, um den Einführkanal 5 bzw. die Silikonarme 21, 22, die diesen definieren, um das eingebrachte Befüllmittel 6 herum vorzuspannen und damit ein dichtes Anliegen um die Kontaktfläche zwischen Befüllmittel und Silikon zu realisieren.

Bei relativ großen Durchmessern (größer als 10 mm) kann zusätzlich vorgesehen sein, dass das Befüllmittel 6 zur Erhöhung der Verbindungskraft und Dichtigkeit mittels eines zusätzlichen Quetschmittels 7 von außen gesichert wird. Ein solches Quetschmittel 7, beispielsweise eine Schlauchschelle oder ein Kabelbinder, muss aber nicht mehr, wie im Stand der Technik, einen Spalt zwischen Silikonspur 21, 22 und Befüllmittel 6 zudrücken. Dementsprechend verringert sich durch die genutzte Eigenelastizität des Silikons und das damit verbundene formschlüssige Anliegen der Oberflächen die erforderliche Anzugskraft des Quetschmittels 7.

Bei relativ kleinen Durchmessern von beispielsweise kleiner als 10 mm kann auf solche Quetschmittel 7 auch ganz verzichtet werden. Eine entsprechende Anordnung zeigen die Figuren 2A, 2B, die ansonsten den Figuren 1B und 1C entsprechen. Die Haltekraft der Verbindung allein über die Eigenelastizität des aufgeweiteten Klebemittels ist groß genug, um eine ausreichende Verbindungskraft zwischen den aneinander anliegenden Oberflächen von Silikon und Befüllmittel zu erreichen.

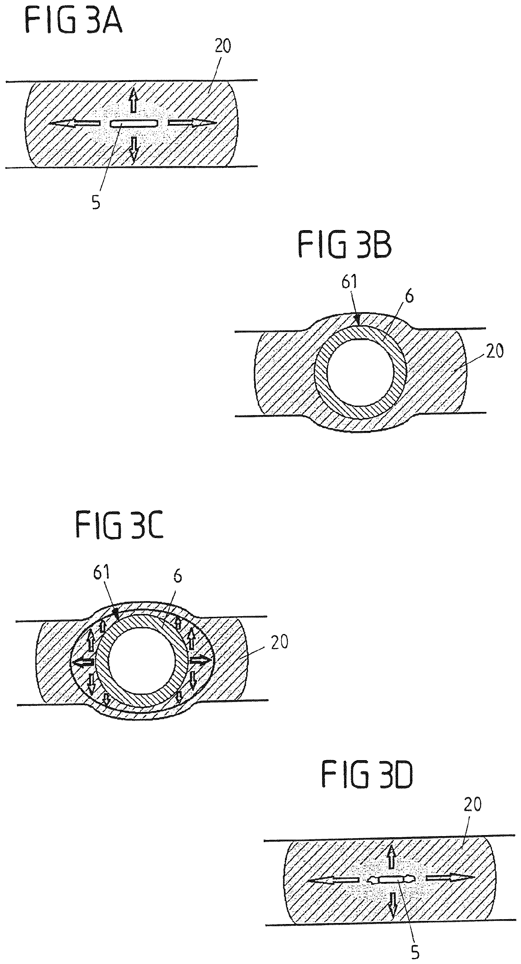

Die Wirkungsweise der erfindungsgemäßen Lösung wird anhand der Figuren 3A bis 3D im Folgenden weitergehend erläutert. Dabei gilt, dass die Dichtigkeit und der Kraftschluss der Verbindung zwischen dem Silikon bzw. dem Gassack einerseits und dem Befüllmittel andererseits dadurch erreicht wird, dass das Silikon von innen her nach außen verdrängt und dadurch wie eine konzentrische Feder aufgeladen wird.

Die Figur 3A geht von einem lichten Spalt 5 aus, den das Inlay 3 freigehalten hat. Bei Einschieben eines Befüllmittels 6 wie z. B. eines Schlauches oder eines Rohres wird das Silikon 20 konzentrisch verdrängt. Das Silikon 20 kann dabei primär nur nach oben und nach unten ausweichen.

Gemäß Figur 3B spannt sich das verdrängte Silikon 20 formschlüssig um die eingeschlossene Oberfläche 61 des Befüllmittels 6 und bäumt sich nach oben und unten samt dem verklebten Gassackgewebe nach außen aus. Durch den Formschluss und die Elastizität des Silikons, das sich komplett an die Oberfläche 61 des Befüllmittels 6 anschmiegt, entsteht eine absolute Dichtigkeit zwischen eingeschobenem Befüllmittel 6 und dem Silikon 20.

Dabei gilt, wie in der Figur 3C dargestellt, dass in der horizontalen Richtung ein höherer Widerstand des relativ breit vorliegenden Silikons vorhanden ist. In der Vertikalen ist das Silikon 20 relativ dünner, so dass die Gegenkraft entsprechend weniger stark ist. Das Silikon 20 wird daher an den Seiten links und rechts am stärksten gedehnt.

Dies erklärt auch, warum das Silikon 20 bei Belastung über die Elastizitätsgrenze hinaus in horizontaler Richtung weiter einreißt, bis die Dehnungsgrenze wieder erreicht ist, wie in der Figur 3D dargestellt ist. Je nach Wahl des verwendeten Klebemittels kann hierdurch erreicht werden, dass das Befüllmittel 6 mit einer besonders hohen Haltekraft (z.B. höher als durch eine Klebverbindung) am Gassack 1 gehalten wird.

Das verwendete Silikon weist beispielsweise ein Dehnungsvermögen von ca. 1000 % auf, d.h. das Material kann auf seine 10-fache Ausdehnung gezogen werden. Mit diesem Wert lässt sich die optimale Breite eines Inlays 3 näherungsweise dimensionieren. Hierbei ist zu beachten, dass die vertikale und die horizontale Verdrängung des Silikons innerhalb der Öffnung unterschiedlich stark sind. Je dünner die Silikonschicht in seiner vertikalen Höhe dimensioniert ist, desto stärker weicht die Belastung des Silikons von einer gleichmäßigen Verteilung ab. Als praktikabler Wert kann ein durchschnittlicher Dehnungsfaktor mit ca. 5 angesetzt werden. Die Umfänge würden für diesen Fall wie folgt ins Verhältnis gesetzt:

$$U \text{ (Inlay) } *5 = U \text{ (Befüllmittel)},$$

wobei U den Umfang angibt und gilt, dass

$$U \text{ (Inlay) } = 2 *b$$

und

$$U \text{ (Befüllmittel) } = \pi \text{ x } D$$

ist.

Dabei gibt b die Breite eines Inlays 3 und D den Durchmesser des Befüllmittels 6 an. Wenn man beispielsweise D bei 8 mm ansetzt, so ergibt sich für die Breite des Inlays 3: b = 8 mm * $\pi$ / (5*2), so dass die Breite des Inlays bei ca. 2,5 mm liegt. Ein Inlay dieser Breite würde somit ausreichend breit sein, damit beim Einschieben eines Befüllmittels mit einem Durchmesser D von 8 mm kein internes Reißen der lichten Öffnung stattfände, wobei eine annähernd maximale Spannung des elastischen Silikons ausgenutzt werden kann. Die "Einschubtiefe" durch das Silikon hindurch wiederum geht annähernd linear in die Verbindungskraft ein.

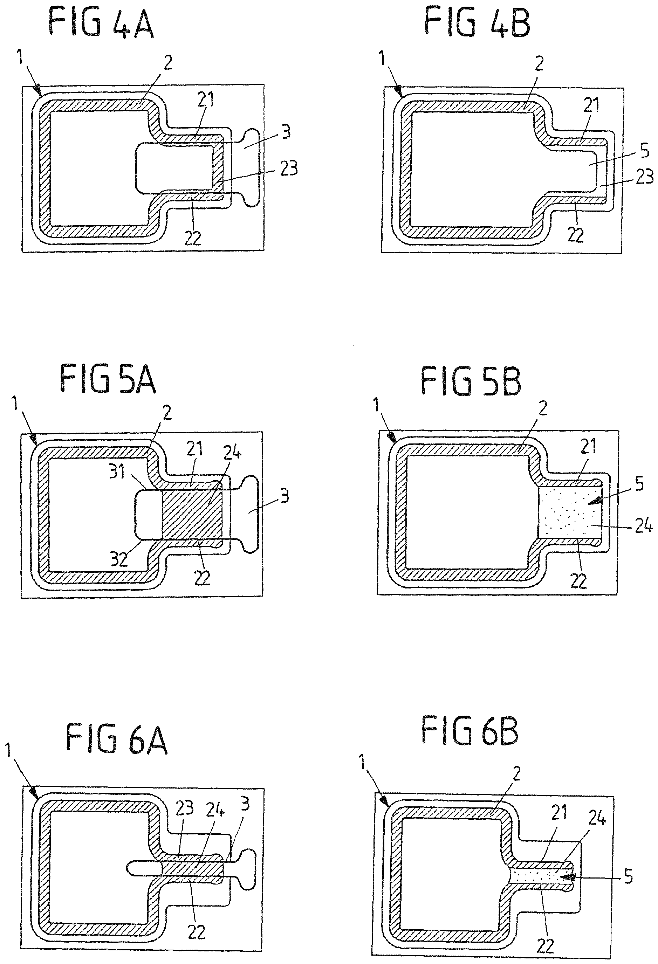

Die Figuren 4A, 4B zeigen eine Abwandlung, bei der die Dichtigkeit der Verbindung dadurch weitergehend verbessert ist, dass auch ein Bereich 23 zwischen den den Einführkanal 5 bildenden Silikonspursegmenten 21, 22 mit Silikon aufgefüllt wird, z. B. in der Zone, auf die nachher das äußere Quetschmittel 7 (vgl. Figur 1D) gepresst wird. Hierdurch entsteht eine Silikonfläche ohne Unterbrechung um das eingeschobene Befüllmittel herum.

Gemäß den Figuren 5A, 5B kann gemäß einer weiteren Ausführungsvariante auch der ganze Flächenbereich 24 zwischen den Silikonspursegmenten 21, 22 mit Silikon aufgefüllt werden. Mit anderen Worten erstreckt sich das Silikon nicht nur an den seitlichen Rändern 31, 32 des Inlays 3, sondern auch an der Oberseite und der Unterseite des Inlays 3, und umgibt dieses - und nach Entfernen des Inlays das eingeschobene Befüllmittel - somit vollständig. Dadurch wird die resultierende Adhäsionsfläche vergrößert und die Verbindungskraft zwischen Befüllmittel und Gassack weiter erhöht.

Die Figuren 6A, 6B zeigen ein Ausführungsbeispiel, bei der die Adhäsionskraft, verstärkt durch die Vorspannung des Silikons ausreicht, um eine sichere gasdichte Verbindung auch ohne Quetschmittel zu ermöglichen. Die geometrische Konstellation ist hier ausschlaggebend. Die Höhe der Silikonspur (Rakelhöhe) und die Einstechtiefe (d.h. die Länge, über die sich der elastische Einführkanal 5 erstreckt und an dem Befüllmittel anliegt) sind die primär maßgeblichen Parameter. Grundsätzlich entspricht die Ausgestaltung der Figuren 6A, 6B der Ausgestaltung der Figuren 5A, 5B, wobei jedoch der Einführkanal 5 enger ausgebildet ist und das Inlay 3 dementsprechend eine geringere Breite aufweist.

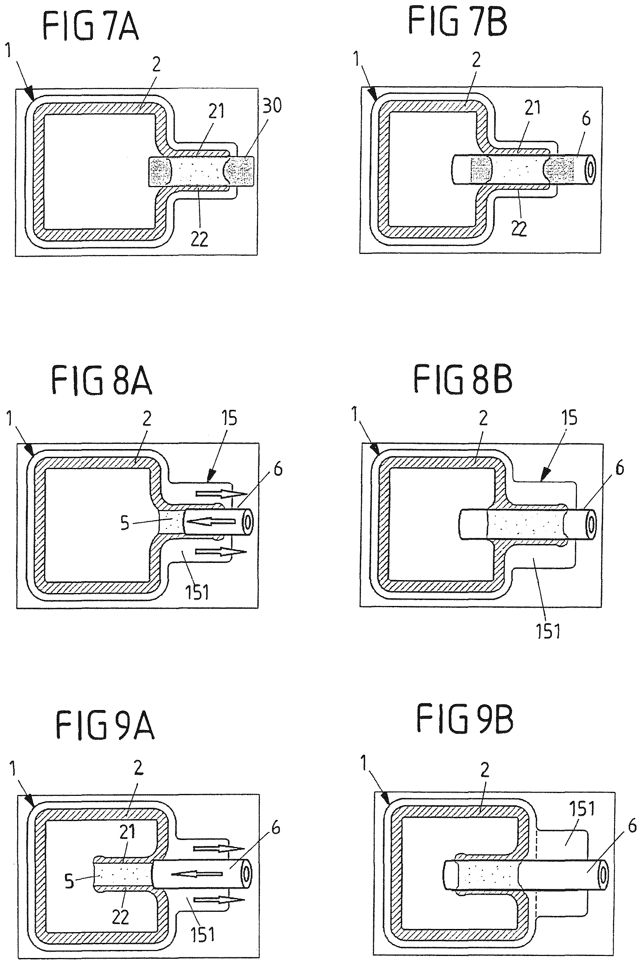

Bei relativ langer Einstechtiefe in das Silikon kann es vor allem bei sehr kleinen, schmalen Inlays zu Schwierigkeiten bei der Entnahme kommen. Dabei besteht die Gefahr, dass das Inlay abreißt und ganz oder teilweise den Einführkanal 5 verstopft. Daher sieht eine weitere, in den Figuren 7A, 7B dargestellte Ausgestaltung der Erfindung vor, das eingelegte Inlay einfach in der Silikonfläche zu belassen. Hierzu kann z. B. vorgesehen sein, dass ein flacher Schlauch 30 aus dem gleichen Material (z. B. 2K-Silikon) eingelegt wird, der sich vollständig mit dem Silikon der Silikonnaht 2 verbindet, wie in Figur 7A dargestellt. Dadurch bleibt die gewünschte lichte Öffnung des Einführkanals enthalten und das Inlay 30 wird bei der Klebung zum Bestandteil der Silikonschichten, wie in der Figur 7B dargestellt. Das Befüllmittel 6 wird dann auf den in dieser Weise ausgebildeten Einführkanal eingefügt.

In dem Maße, in dem die Verengung des Einführkanals 5 gegenüber dem Umfang des Befüllmittels zur Erhöhung der Verbindungskräfte benutzt wird, erhöht sich der Kraftaufwand beim Eindringen des Befüllmittels 6 in den Befüllkanal 5. Daher kann es erforderlich sein, den Gassack 1 und speziell den Einführkanal 3 beim Zusammenfügen entsprechend festzuhalten oder zu fixieren. Hierzu kann im einfachsten Fall die Zuschnittsbreite des rüsselförmigen Anschlussbereichs 15 entsprechend verbreitert werden, wie in Figuren 8A, 8B dargestellt. Der rüsselförmige Anschlussbereich bildet dabei Festhalteränder 151 aus.

In entsprechender Weise kann es vorgesehen sein, dass der rüsselförmige Anschlussbereich 15 über den silikonisierten Bereich hinaus verlängert wird, so dass die überstehenden Laschen 151 über und unter der Einschuböffnung zum Gegenhalten der Einschubkraft genutzt werden können, wie in Figur 9A dargestellt. Bei Bedarf können die Laschen 151 nach dem Fügeprozess dabei abgetrennt werden, wie durch die Strichlinie in Figur 9B angedeutet.

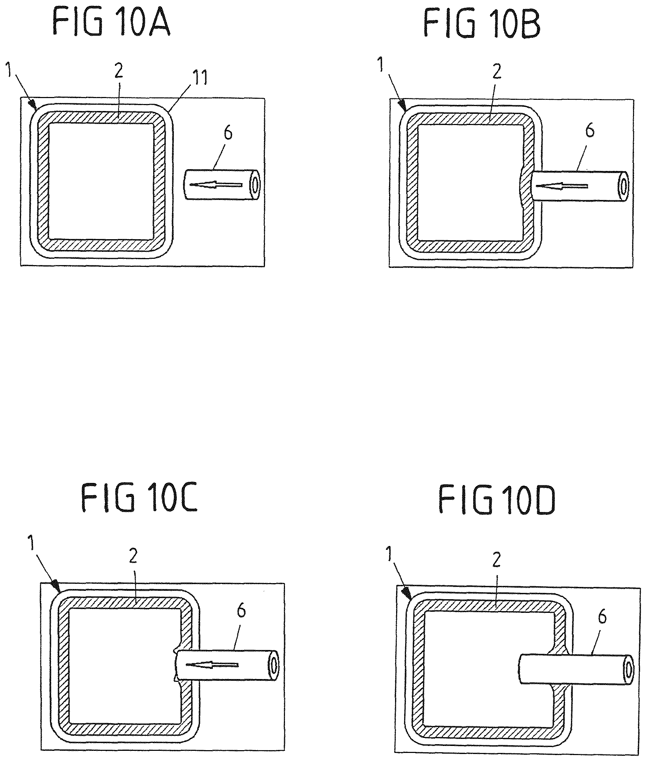

Die Figuren 10A bis 10D zeigen eine Prinzipdarstellung einer weiteren Ausführungsvariante des erfindungsgemäßen Verfahrens. Dabei wird gemäß Figur 10A zwischen mindestens zwei Gassacklagen eines Gassacks 1 eine Silikonspur 2 bereitgestellt. Von den mindestens zwei Gassacklagen des Gassacks 1 ist ebenso wie in den Figuren 1A bis 1D lediglich die untere Gassacklage 11 dargestellt. Die Silikonspur 2 bildet eine geschlossene Silikonspur, die entlang des Umfangs des Gassacks 1 verläuft und dessen Randbereiche miteinander verbindet. Die Fertigung des Gassacks 1 erfolgt insofern standardgemäß.

Nach dem Aushärten des Silikons wird ein Befüllmittel 6, z. B. ein Befüllschlauch kleinen Durchmessers, im Wesentlichen senkrecht zur Silikonspur 2 durch diese hindurch bis in den Aufblasbereich im Inneren des Gassackes 1 eingeschoben, wie in den Figuren 10B bis 10D dargestellt. Das Befüllmittel 6 kann dabei mit Hilfe eines pneumatischen Kolbens oder dergleichen durch die geschlossene Silikonspur 2 gedrückt werden. Aufgrund der großen Durchstoßkräfte durch die geschlossene Silikonspur 2 ist es vorteilhaft, wenn der Gassack 1 für die Montage fest an einem Arbeitstisch befestigt wird.

Dabei sorgt die Elastizität des Silikons für ein lichtes Umspannen des eingeschobenen Gegenstandes und für eine dichte Verbindung der Oberflächen zueinander. Beim Einschieben des Gegenstandes wird das Silikon mittig aufgerissen und konzentrisch nach außen verdrängt. Dieses wird dadurch vorgespannt und bewirkt ein dichtes Anliegen um die Kontaktfläche, d.h. die äußere Oberfläche des Befüllmittels 6.

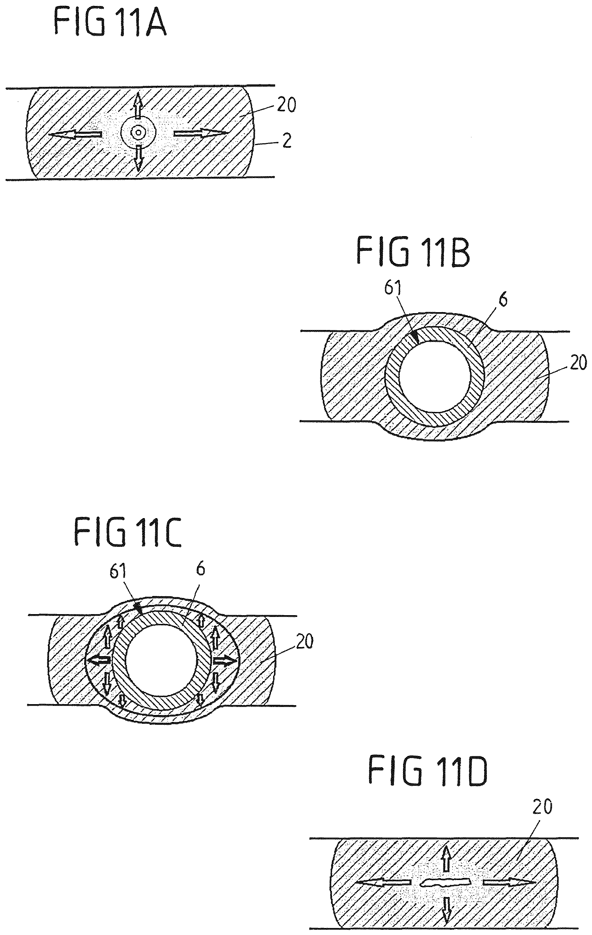

Die Figuren 11A bis 11D erläutern - in entsprechender Weise wie die Figuren 3A bis 3D zum Ausführungsbeispiel der Figuren 1A bis 1D - die physikalischen Hintergründe der Verbindung. Hierbei gilt wiederum, dass die Dichtigkeit und der Kraftschluss der Verbindung zwischen Befüllmittel einerseits und Gassack bzw. Silikon 20 der Silikonspur 2 dadurch erreicht wird, dass das Silikon 20 von innen her nach außen verdrängt wird. Dabei beträgt das Dehnungsvermögen des Silikons beispielsweise ca. 1000 %, d. h., das Material kann auf seine zehnfache Ausdehnung gezogen werden, bevor es einreißt.

Die Figur 11A illustriert, ausgehend von einem mittigen Einsatz der Eindringung des Befüllmittels 6, ein konzentrisches Verdrängen des Silikons 20 der Silikonspur 2 durch das Einschieben des Befüllmittels 6. Das Silikon 20 kann dabei primär nur nach oben und nach unten ausweichen.

Gemäß Figur 11B spannt sich das verdrängte Silikon 20 formschlüssig um die eingeschobene Oberfläche 61 des Befüllmittels 6. Durch den Formschluss und die Elastizität des Silikons 20, das sich komplett anschmiegt, entsteht eine absolute Dichtigkeit zwischen eingeschobenen Gegenstand 6 und dem Silikon 20.

Gemäß Figur 11C ist dabei in der horizontalen Richtung ein höherer Widerstand des relativ breit vorliegenden Silikons 20 vorhanden. In der Vertikalen ist das Silikon relativ dünner, so dass die Gegenkraft entsprechend weniger stark wirkt. Das Silikon 20 wird daher an den Seiten links und rechts am stärksten gedehnt.

Damit erklärt sich auch, wie in der Figur 11D dargestellt, warum das Silikon beim Eindringen des Befüllmittels bzw. eines Vorstechdornes in vornehmlich horizontaler Richtung einreißt, wenn die Dehnungsgrenze der Silikonelastizität erreicht ist.

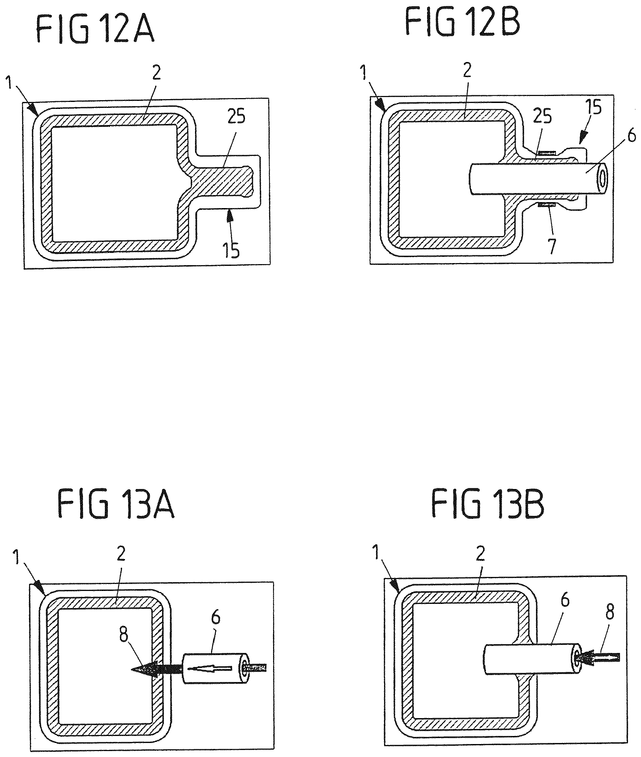

Die Figuren 12A, 12B zeigen eine Abwandlung des Ausführungsbeispiels der Figuren 10A bis 10D, bei der die Einschubstelle in die Silikonspur 2 wie ein Rüssel 25 ausgeführt ist, um die Kontaktoberfläche zwischen dem Silikon einerseits und dem eingeschobenen Gegenstand andererseits und damit den Kraftschluss der Verbindung zu vergrößern. Die rüsselartige Silikonspur 25 ist dabei in einem rüsselförmigen Anschlussbereich 15 des Gassacks 1 ausgebildet und wird so ausgelegt, dass sie in jedem Toleranzfall die parallelen Spursegmente überlagern. Durch die auf diese Weise gefertigte breite Silikonspur 25 kann jetzt ein Befüllschlauch 6 definiert mittig eingeschoben werden, wie in der Figur 12B dargestellt. Dabei nimmt die Einstechkraft mit der Durchstechungstiefe entsprechend zu.

Bei relativ kleinen Durchmessern eines Befüllmittels 6, beispielsweise bei Befüllschläuchen und dergleichen mit einem Durchmesser von kleiner 8 mm, kann wiederum auf ein Quetschmittel verzichtet werden. Die Haltekraft der Verbindung ist über die Eigenelastizität des ausgedehnten Silikons 20 groß genug, um ausreichende Anhaftung und Dichtigkeit der Oberflächen zueinander zu erreichen. Die Höhe der Silikonspur 25 (Rakelhöhe) und die Einstecktiefe sind die maßgeblichen Parameter für den Kraftschluss der Verbindung und können dem jeweiligen Anwendungsfall angepasst werden.

Nach der Montage des Befüllmittels 6 kann aber zur Erhöhung der Qualität und für eine bessere Handhabung zusätzlich eine Schelle 7, ein Kabelbinder, ein Tape oder dergleichen eingesetzt werden, wie in der Figur 12B dargestellt ist.

Das aufgebrachte Quetschmittel 7 muss jetzt nicht mehr den im Stand der Technik vorhandenen Spalt zwischen Silikonspur und eingefügtem Befüllschlauch gasdicht schließen. Durch die Eigenelastizität des Silikons und das formschlüssige Anliegen der Oberflächen verringert sich die erforderliche Anzugskraft des Quetschmittels 7.

Um ein Befüllmittel 6, das häufig stirnseitig eine ebene Fläche aufweist (z. B. bei Realisierung des Befüllmittels durch einen Schlauch) durch eine Silikonspur 2 drücken zu können, sieht eine Ausgestaltung der Erfindung die Verwendung eines Dorns für eine Vorstecharbeit vor, wie in den Figuren 13A, 13B dargestellt ist. Ein entsprechender Dorn 8 kann stirnseitig an dem einzubringenden Befüllmittel 6 angeordnet werden und erleichtert das Durchstechen des Befüllmittels 6 durch die Silikonspur 2. Nach der Platzierung des Befüllmittels 6 kann der Dorn 7 wieder entnommen werden, beispielsweise durch den Hohlzylinder eines schlauchförmigen Befüllmittels 6. Darüber hinaus kann ein solcher Dorn 8 dazu dienen, eine möglichst gradlinige und definierte Eindringung des Befüllmittels 6 bereitzustellen, wodurch die entstehende Sollbruchstelle exakter definiert und eine verbesserte Qualität der Anordnung bereitgestellt wird.

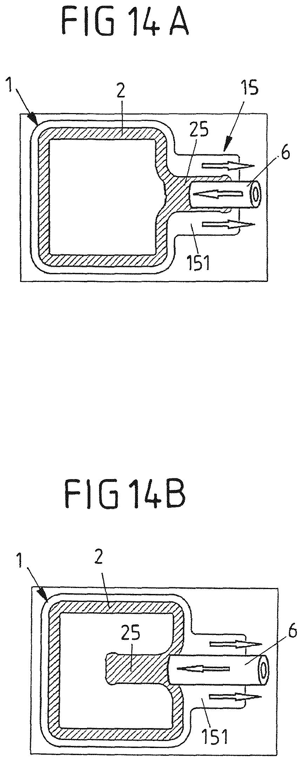

Wiederum gilt, dass für eine Schlauchmontage der Gassackanschlusskanal genügend festgeklemmt oder gehalten werden muss. Hierzu kann in einem Ausführungsbeispiel vorgesehen sein, dass der Anschlussbereich 15 breitere Ränder 151 bekommt, in denen der Gassack zum Einschieben des Befüllmittels 6 festgehalten werden kann, wie in Figur 14A dargestellt ist. Gemäß einer weiteren Ausgestaltung (vgl. Figur 14B) kann vorgesehen sein, dass der Anschlussbereich 15 über den silikonisierten Bereich hinaus verlängert wird, so dass die überstehenden Laschen 151 über und unter der Einschuböffnung zum Gegenhalten der Einschubkraft genutzt werden können.

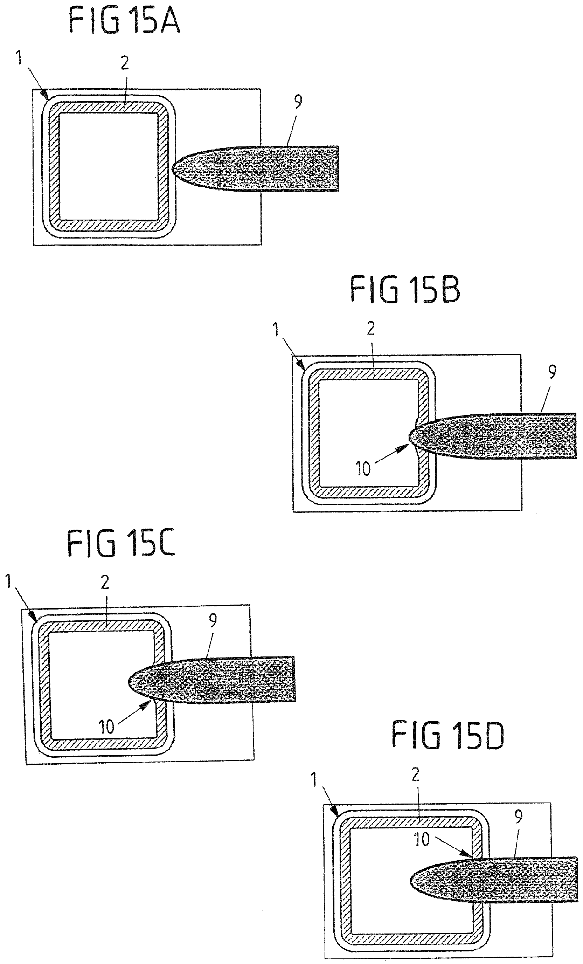

Die Figuren 15A bis 15D zeigen eine Abwandlung des Verfahrens, das insbesondere für Befüllmittel größeren Durchmessers, insbesondere für Befüllmittel mit einem Durchmesser von mehr als 8 mm bevorzugt einsetzbar ist. Hierbei ist vorgesehen, dass zunächst mit Hilfe eines Werkzeugs 9 eine Öffnung 10 in eine Silikonspur 2 gestoßen wird, um eine Art Aufnahmekanal für das Befüllmittel, z. B. einen Gasgenerator, bereitzustellen. Das Werkzeug 9 kann dabei schwertähnlich ausgeführt sein. Nach dem Öffnen der Silikonnaht 2 wird das Werkzeug 9 wieder herausgezogen. Anschließend wird das Befüllmittel durch die entstandene, beispielsweise schlitzartige Öffnung 10 in die Silikonspur 2 geschoben. Das Verfahren verläuft dann im Weiteren wie in Bezug auf die Figuren 10A bis 10D beschrieben.

Bei der Montage z.B. eines Gasgenerators in einem Gassack kann der Gasgenerator dabei fest eingespannt und dabei der Gassack darüber geschoben werden. Dabei ist es auch möglich, den Gassackmund zu fixieren und den Gasgenerator mit einer pneumatischen Einschubhilfe in den Gassack zu schieben. Die gummiartige Eigenschaft des Silikons erlaubt dabei ein Hineinschieben von Gasgeneratoren mit scharfen Kanten in Grenzen der Arbeitssicherheit.

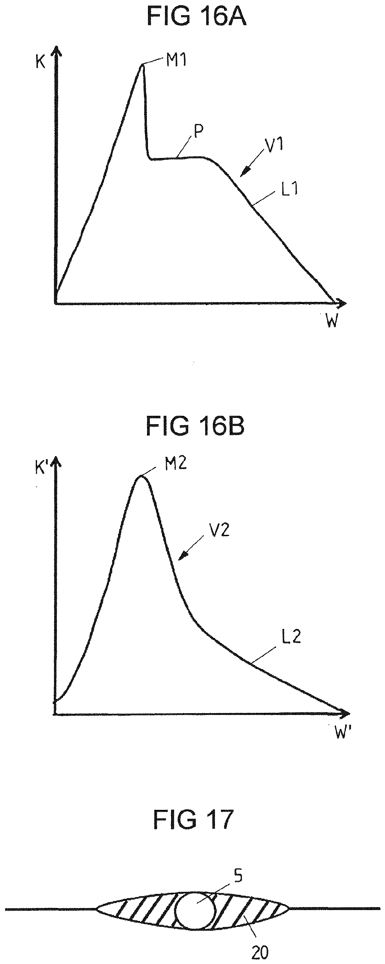

Anhand der schematischen Darstellungen der Fig. 16A und 16B werden nachfolgend mögliche Vorteile einer elastischen Halterung des Befüllmittels 6 durch die elastischen Haltekräfte des Klebemittels 20 in Form von Silikon gegenüber einer Verklebung des Befüllmittels 6 in der Öffnung 5 des Gassacks 1 (ebenfalls mit Silikon) ohne elastischen Haltekräften erläutert. Eine solche Verklebung kann beispielsweise aufgebaut werden, indem das Befüllmittel 6 bereits vor einem Aushärten des Klebemittels 20 mit diesem in Berührung gebracht wird.

Beide Fig. 16A und 16B zeigen jeweils ein Kraft-Weg-Diagramm aus Zugkraftmessungen bei einem Zug an dem Befüllmittel 6 mit festgehaltenem Gassack 1 in konkreten Anwendungsbeispielen. Kurven V1, V2 in den Fig. 16A und 16B zeigen jeweils den Verlauf einer angewendeten (Zug-) Kraft K, K' gegen einen zurückgelegten Weg W, W' eines Zugmittels.

Die Achsen K, K', W, W' der beiden schematisch dargestellten Diagramme sind unterschiedlich skaliert, sodass die Verläufe der Kurven V1, V2, nicht aber deren Absolutwerte anhand der Fig. 16A und 16B miteinander verglichen werden können. Die in Fig. 16A dargestellte Kurve V1 aus der Messung einer konkreten elastischen Halterung des Befüllmittels 6 durch elastische Haltekräfte des Klebemittels 20 erreicht einen Maximalwert M1 der - bei einer gleichen Länge (in Zugkraftrichtung gesehen) des Klebemittels 20 - höher ist als ein Maximalwert M2 der Kurve V2.

Bei Erreichen des Maximalwerts M1 bringt das Zugmittel das Befüllmittel 6 in Relativbewegung zum Klebemittel 20. Im vorliegenden Anwendungsbeispiel zur Fig. 16A ist das Befüllmittel 6 durch das Klebemittel 20 kraftschlüssig in der Öffnung 5 des Gassacks 1 gehalten. Ein Übergang von einer Haftreibung zu einer Gleitreibung macht sich in einem Abfall der Zugkraft (auf vorliegend etwa 2/3 des Maximalwerts M1) bemerkbar. Bei einem weiteren Zug an dem Befüllmittel 6 verbleibt die Zugkraft im Wesentlichen konstant, sodass die Kurve V1 ein Plateau P bildet. Beginnt sich die Kontaktfläche zwischen Befüllmittel und Klebemittel zu verringern, so fällt die Zugkraft weiter (im Wesentlichen linear) in einem Abschnitt L1 bis Null ab. Dies entspricht der Stelle, an der das Befüllmittel 6 außer Kontakt mit dem Klebemittel 20 gerät. Da das Klebemittel 20 elastische Haltekräfte auf das Befüllmittel 6 ausübt, kann es auch nach einer gewissen Verlagerung des Befüllmittels 6 (z.B. um einige mm) dieses in der Öffnung 5 gasdicht abdichten. Auch eine Zugentlastung des Befüllmittels 6 kann noch bereitgestellt sein.

Demgegenüber sinkt die Zugkraft K' bei der Verklebung des Befüllmittels 6 ohne elastische Haltekräfte (Fig. 16B) durch eine Zerstörung der Verklebung bei Erreichen des Maximalwertes M2 rasch ab, vorliegend auf etwa 1/3 der Maximalkraft M2. Daraufhin sinkt die Zugkraft in einem Abschnitt L2 im Wesentlichen linear. Im Vergleich zur Kurve K1 erreicht die Kurve K2 einen Wert der Zugkraft K' von etwa Null bereits nach einer kürzeren Weglänge W'. Im Gegensatz zu einer bloßen Verklebung ist ein kraftschlüssig gehaltenes Befüllmittel 6 daher sicherer in der Öffnung gehalten.

Fig. 17 zeigt eine Öffnung 5 eines Gassacks 1 nach Abziehen eines zuvor mittels Klebemittel 20 mit der Öffnung 5 verklebten Befüllmittels 6 (nicht dargestellt). Die Öffnung 5 entspricht im Wesentlichen dem Durchmesser des Befüllmittels 6 (im Gegensatz zur Halterung mit elastischen Haltekräften, wie im Zusammenhang mit den Fig. 3A bis3D und 11A bis 11D bereits beschrieben). Das Klebemittel 20 wurde für die Verklebung bereits vor dem Aushärten mit dem Befüllmittel 6 in Kontakt gebracht. Das Klebemittel 20 hat sich daher lediglich um das Befüllmittel 6 gelegt, ohne elastische Haltekräfte aufzubauen. Durch eine Zerstörung der Verklebung dichtet das Klebemittel 20 nicht mehr gasdicht gegen das Befüllmittel 6 ab, auch wenn sich dieses noch (zumindest teilweise) in der Öffnung 5 befindet. Auch kann eine zerstörte Klebeverbindung keine Zugentlastung bereitstellen. Eine Druckbeaufschlagung des Gassacks 1 kann bei einer zerstörten Klebverbindung das Befüllmittel 6 zudem aus der Öffnung des Gassacks 1 herausdrücken.

Ein Anwendungsbeispiel der erfindungsgemäßen Gassackanordnung und des erfindungsgemäßen Verfahrens bestehen darin, dass ein Schlauch beispielsweise eines Durchmessers von 6 mm durch eine trockene Silikonspur zur Befüllung eines kleinen Airbags mit einem Volumen von etwa 1 l geführt wird.

Ein anderes Anwendungsbeispiel sieht vor, dass ein Gasgenerator durch eine trockene Silikonspur geführt wird. Dabei wird nach Herstellung des dichten Gassackes, z. B. eines Standardgassackes mit einem Volumen von 36 l, im Befüllbereich des Gassacks die trockene Silikonspur gemäß den Figuren 15A-15D zunächst durchstoßen und der Gasgenerator anschließend hineingeschoben.

Die Erfindung beschränkt sich in ihrer Ausgestaltung nicht auf die vorstehend dargestellten Ausführungsbeispiele, die lediglich beispielhaft zu verstehen sind. Beispielsweise können die Silikonspuren in anderer Weise und mit anderer Form als dargestellt realisiert sein.

**Patentansprüche**

1. Gassackanordnung mit einem Gassack (1) und einem Befüllmittel (6) zur Befüllung des Gassacks (1) mit Gas,
   **dadurch gekennzeichnet,**
   **dass** das Befüllmittel (6) in einer Öffnung (5) des Gassacks (1) angeordnet und in der Öffnung (5) durch ein im Bereich der Öffnung (5) angeordnetes Haltemittel (20) elastisch gehalten ist, wobei das Haltemittel (20) elastische Eigenschaften aufweist, aufgrund deren es Haltekräfte auf das Befüllmittel (6) ausübt, wobei das Haltemittel (20) als Klebemittel ausgebildet ist, und wobei das Klebemittel (20) durch mindestens eine Klebemittelspur (2, 21-25) bereitgestellt ist, die zwischen zwei oder mehr Gassacklagen (11) des Gassacks (1) angeordnet ist.

2. Anordnung nach Anspruch 1, **dadurch gekennzeichnet, dass** das Befüllmittel (6) im Querschnitt im Wesentlichen kreisförmig ausgebildet ist und das Haltemittel (20) in radialer Richtung elastische Kräfte auf das Befüllmittel (6) ausübt.

3. Anordnung nach einem der vorangehenden Ansprüche, **dadurch gekennzeichnet, dass** das Befüllmittel (6) in einem elastisch verformbaren Einführkanal (5), der durch die mindestens eine Klebemittelspur (2, 21-25) des Gassacks (1) gebildet ist, elastisch gehalten ist.

4. Anordnung nach einem der vorangehenden Ansprüche, **dadurch gekennzeichnet, dass** das Befüllmittel (6) in einem rüsselartigen Anschlussbereich (15) des Gassacks (1) elastisch durch das Haltemittel (20) gehalten ist.

5. Anordnung nach einem der vorangehenden Ansprüche, **dadurch gekennzeichnet, dass** das Befüllmittel (6) ein Befüllschlauch, ein Befüllrohr oder ein Gasgenerator ist.

6. Anordnung nach einem der vorangehenden Ansprüche, **dadurch gekennzeichnet, dass** die elastischen Haltekräfte, die das Haltemittel (20) auf das Befüllmittel (6) ausübt, zu einer kraftschlüssigen Halterung des Befüllmittels (6) in der Öffnung (5) des Gassacks (1) führen.

7. Anordnung nach einem der vorangehenden Ansprüche, **dadurch gekennzeichnet, dass** das Befüllmittel (6) in der Öffnung (5) des Gassacks (1) nicht durch eine Klebverbindung gehalten ist und dass insbesondere zwischen dem Haltemittel (20) und dem Befüllmittel (6) keine Klebverbindung besteht.

8. Verfahren zur Herstellung einer Gassackanordnung gemäss einem der Ansprüche 1 bis 7, mit den Schritten:

   - Bereitstellen eines Gassacks (1), der zumindest in einem Teilbereich mindestens ein zwischen zwei oder mehreren Gassacklagen (11) angeordnetes Haltemittel in Form eines Klebemittels (20) aufweist, das durch eine ausgehärtete Klebemittelspur (2, 21-25) bereitgestellt ist;
   - Schieben eines länglichen Befüllmittels (6) durch die mindestens eine Klebemittelspur (2, 21-25) oder in einen mittels der mindestens einen Klebemittelspur (2, 21-25) gebildeten elastisch verformbaren Einführkanal (5), wobei das Befüllmittel (6) Klebemittel (20) der mindestens einen Klebemittelspur (2, 21-25) verdrängt und das Klebemittel (20) eine elastische Haltekraft auf das Befüllmittel (6) ausübt.

9. Verfahren nach Anspruch 8, **dadurch gekennzeichnet, dass** das Befüllmittel (6) durch eine zuvor unversehrte Klebemittelspur (2, 21-25) hindurch geschoben wird.

10. Verfahren nach Anspruch 9, **dadurch gekennzeichnet, dass** an dem Befüllmittel (6) stirnseitig ein Dorn (8) angeordnet ist, der die Bewegung des Befüllmittels (6) durch die Klebemittelspur (2, 21-25) führt und der nach der erfolgten Positionierung des Befüllmittels (6) wieder entfernt wird.

11. Verfahren nach Anspruch 8, **dadurch gekennzeichnet, dass** das Befüllmittel (6) durch eine Klebemittelspur (2, 21-25) hindurch durchgeschoben wird und vor dem Schieben des Befüllmittels (6) durch die Klebemittelspur (2, 21-25) mittels eines Werkzeugs (9) ein Einschnitt (10) in der Klebemittelspur (2, 21-25) vorgenommen wird.

12. Verfahren nach Anspruch 8, **dadurch gekennzeichnet, dass** in einem Anschlussbereich (15) des Gassacks (1) ein elastisch verformbarer Einführkanal (5) genau definierten Durchmessers zur Aufnahme des Befüllmittels (6) bereitgestellt wird, indem

- in dem Anschlussbereich (15) auf eine untere Gassacklage (11) mindestens eine Klebemittelspur (2, 21-25) aufgebracht wird,
- in das noch nasse Klebemittel (20) der mindestens einen Klebemittelspur (2, 21-25) ein Inlay (3) eingelegt wird,
- mindestens eine obere Gassacklage aufgelegt wird,
- das Klebemittel (20) aushärtet, und
- das Inlay (3) wieder entfernt wird oder elastisch ausgebildet ist.

**13.** Anordnung nach einem der Ansprüche 8 bis 12, **dadurch gekennzeichnet, dass** die elastische Haltekraft, die das Klebemittel (20) auf das Befüllmittel (6) ausübt, zu einer kraftschlüssigen Halterung des Befüllmittels (6) in der Öffnung (5) des Gassacks (1) führen.

**14.** Verfahren nach einem der Ansprüche 8 bis 13, **dadurch gekennzeichnet, dass** das Befüllmittel (6) in der Öffnung (5) des Gassacks (1) nicht durch eine Klebverbindung gehalten wird und dass insbesondere zwischen dem Klebemittel (20) und dem Befüllmittel (6) keine Klebverbindung hergestellt wird.

**Claims**

**1.** A gas bag arrangement with a gas bag (1) and a filling means (6) for filling the gas bag (1) with gas, **characterized in that** the filling means (6) is arranged in an opening (5) of the gas bag (1) and is elastically held in the opening (5) by a holding means (20) arranged in the region of the opening (5), wherein the holding means (20) has elastic properties due to which it exerts holding forces on the filling means (6), wherein the holding means (20) is formed as adhesive, wherein the adhesive (20) is provided by at least one adhesive track (2, 21-25) which is arranged between two or more gas bag layers (11) of the gas bag (1)

**2.** The arrangement according to claim 1, **characterized in that** the filling means (6) is formed substantially circular in cross-section and the holding means (20) exerts elastic forces on the filling means (6) in radial direction.

**3.** The arrangement according to any of the preceding claims, **characterized in that** the filling means (6) is elastically held in an elastically deformable introduction channel (5) which is formed by the at least one adhesive track (2, 21-25) of the gas bag (1).

**4.** The arrangement according to any of the preceding claims, **characterized in that** the filling means (6) is elastically held in a snout-like connecting region (15) of the gas bag (1) by the holding means (20).

**5.** The arrangement according to any of the preceding claims, **characterized in that** the filling means (6) is a filling hose, a filling tube or a gas generator.

**6.** The arrangement according to any of the preceding claims, **characterized in that** the elastic holding forces, which the holding means (20) exerts on the filling means (6), lead to a non-positive attachment of the filling means (6) in the opening (5) of the gas bag (1).

**7.** The arrangement according to any of the preceding claims, **characterized in that** the filling means (6) is not held in the opening (5) of the gas bag (1) by an adhesive connection and that in particular between the holding means (20) and the filling means (6) no adhesive connection exists.

**8.** A method for manufacturing a gas bag arrangement according to any of the claims 1 to 7, with the following steps:

- providing a gas bag (1) which at least in a partial region includes at least one holding means in the form of an adhesive (20) arranged between two or more gas bag layers (11), which is provided by a cured adhesive track (2, 21-25),
- pushing an oblong filling means (6) through the at least one adhesive track (2, 21-25) or into an elastically deformable introduction channel (5) formed by means of the at least one adhesive track (2, 21-25), wherein the filling means (6) displaces adhesive (20) of the at least one adhesive track (2, 21-25) and the adhesive (20) exerts an elastic holding force on the filling means (6).

**9.** The method according to claim 8, **characterized in that** the filling means (6) is pushed through a previously intact adhesive track (2, 21-25).

**10.** The method according to claim 9, **characterized in that** on the end face of the filling means (6) a spike (8) is arranged, which guides the movement of the filling means (6) through the adhesive track (2, 21-25) and which is removed again after positioning of the filling means (6).

**11.** The method according to claim 8, **characterized in that** the filling means (6) is pushed through an adhesive track (2, 21-25) and before pushing the filling means (6) through the adhesive track (2, 21-25) a incision (10) is made in the adhesive track (2, 21-25) by means of a tool (9).

**12.** The method according to claim 8, **characterized in**

**that** in a connecting region (15) of the gas bag (1) an elastically deformable introduction channel (5) of exactly defined diameter is provided for receiving the filling means (6), **in that**

- in the connecting region (15) at least one adhesive track (2, 21-25) is applied on a lower gas bag layer (11),
- into the still wet adhesive (20) of the at least one adhesive track (2, 21-25) an inlay (3) is inserted,
- at least one upper gas bag layer is attached,
- the adhesive (20) cures, and
- the inlay (3) is removed again or is formed elastic.

13. The method according to any of the claims 8 to 12, **characterized in that** the elastic holding force which the adhesive (20) exerts on the filling means (6) leads to a non-positive attachment of the filling means (6) in the opening (5) of the gas bag (1).

14. The method according to any of the claims 8 to 13, **characterized in that** the filling means (6) is not held in the opening (5) of the gas bag (1) by an adhesive connection and that in particular between the adhesive (20) and the filling means (6) no adhesive connection is made.

**Revendications**

1. Ensemble formant coussin à gaz comprenant un coussin à gaz (1) et un moyen de remplissage (6) destiné à remplir le coussin à gaz (1) avec du gaz, **caractérisé en ce que**
le moyen de remplissage (6) est disposé dans une ouverture (5) du coussin à gaz (1) et est maintenu élastiquement dans l'ouverture (5) par un moyen de retenue (20) disposé dans la région de l'ouverture (5), le moyen de retenue (20) présentant des caractéristiques élastiques sur la base desquelles il exerce des forces de retenue sur le moyen de remplissage (6), le moyen de retenue (20) étant conçu sous la forme d'un adhésif et l'adhésif (20) étant formé d'au moins une piste d'adhésif (2, 21-25) qui est disposée entre deux couches (11) ou plus du coussin à gaz (1).

2. Ensemble selon la revendication 1, **caractérisé en ce que** le moyen de remplissage (6) a sensiblement une forme circulaire en coupe transversale et **en ce que** le moyen de retenue (20) exerce dans la direction radiale des forces élastiques sur le moyen de remplissage (6).

3. Ensemble selon l'une des revendications précédentes, **caractérisé en ce que** le moyen de remplissage (6) est maintenu élastiquement dans un conduit d'insertion (5) déformable élastiquement qui est formé par l'au moins une piste d'adhésif (2, 21-25) du coussin à gaz (1).

4. Ensemble selon l'une des revendications précédentes, **caractérisé en ce que** le moyen de remplissage (6) est maintenu élastiquement par le moyen de retenue (20) dans une région de raccordement (15) en forme de trompe du coussin à gaz (1).

5. Ensemble selon l'une des revendications précédentes, **caractérisé en ce que** le moyen de remplissage (6) est un tuyau de remplissage, un tube de remplissage ou un générateur de gaz.

6. Ensemble selon l'une des revendications précédentes, **caractérisé en ce que** les forces de retenue élastiques, exercées par le moyen de retenue (20) sur le moyen de remplissage (6), permettent de maintenir de force le moyen de remplissage (6) dans l'ouverture (5) du coussin à gaz (1).

7. Ensemble selon l'une des revendications précédentes, **caractérisé en ce que** le moyen de remplissage (6) n'est pas maintenu par une liaison adhésive dans l'ouverture (5) du coussin à gaz (1) et aucune liaison adhésive n'est présente notamment entre le moyen de retenue (20) et le moyen de remplissage (6).

8. Procédé de fabrication d'un ensemble formant coussin à gaz selon l'une des revendications 1 à 7, le procédé comprenant les étapes suivantes :

- fournir un coussin à gaz (1) qui comporte au moins dans une sous-région au moins un moyen de retenue disposé entre deux couches de coussin à gaz (11) ou plus et se présentant sous la forme d'un adhésif (20) qui est fourni par une piste d'adhésif durcie (2, 21-25) ;
- pousser un moyen de remplissage allongé (6) à travers l'au moins une piste d'adhésif (2, 21-25) ou dans un conduit d'insertion (5) déformable élastiquement qui est formé par l'au moins une piste d'adhésif (2, 21-25), le moyen de remplissage (6) déplaçant l'adhésif (20) de l'au moins une piste d'adhésif (2, 21-25) et l'adhésif (20) exerçant une force de retenue élastique sur le moyen de remplissage (6).

9. Procédé selon la revendication 8, **caractérisé en ce que** le moyen de remplissage (6) est poussé à travers une piste d'adhésif (2, 21-25) préalablement intacte.

10. Procédé selon la revendication 9, **caractérisé en ce qu'**un mandrin (8) est disposé du côté avant au niveau du moyen de remplissage (6), lequel mandrin guide le mouvement du moyen de remplissage (6) à travers la piste d'adhésif (2, 21-25) puis est retiré une fois le positionnement du remplissage (6) effectué.

11. Procédé selon la revendication 8, **caractérisé en ce que** le moyen de remplissage (6) est poussé à travers une piste d'adhésif (2, 21-25) et une incision (10) est effectuée dans la piste d'adhésif (2, 21-25) à l'aide d'un outil (9) avant de pousser le moyen de remplissage (6) à travers la piste d'adhésif (2, 21-25).

12. Procédé selon la revendication 8, **caractérisé en ce qu'**un conduit d'insertion (5) déformable élastiquement, de diamètre défini avec précision, est réalisé dans une région de raccordement (15) du coussin à gaz (1) pour recevoir le moyen de remplissage (6) par

   - application d'au moins une piste d'adhésif (2, 21-25) sur une couche de coussin à gaz inférieure (11) dans la région de raccordement (15),
   - introduction d'un insert (3) dans l'adhésif encore humide (20) de l'au moins une piste d'adhésif (2, 21-25),
   - application d'au moins une couche de coussin à gaz supérieure,
   - durcissement de l'adhésif (20) durci, et
   - retrait de l'insert (3), ou l'invention étant conçu pour être élastique.

13. Ensemble selon l'une des revendications 8 à 12, **caractérisé en ce que** la force de retenue élastique, exercée par l'adhésif (20) sur le moyen de remplissage (6), permet de retenir force le moyen de remplissage (6) dans l'ouverture (5) du coussin à gaz (1).

14. Procédé selon l'une des revendications 8 à 13, **caractérisé en ce que** le moyen de remplissage (6) n'est pas maintenu par une liaison adhésive dans l'ouverture (5) du coussin à gaz (1) et **en ce qu'**aucune liaison adhésive n'est présente notamment entre l'adhésif (20) et le moyen de remplissage (6).

## FIG 1A

## FIG 1B

## FIG 1C

## FIG 1D

## FIG 2A

## FIG 2B

FIG 3A

FIG 3B

FIG 3C

FIG 3D

FIG 4A

FIG 4B

FIG 5A

FIG 5B

FIG 6A

FIG 6B

FIG 7A

FIG 7B

FIG 8A

FIG 8B

FIG 9A

FIG 9B

FIG 10A

FIG 10B

FIG 10C

FIG 10D

## FIG 11A

20

2

## FIG 11B

61

6

20

## FIG 11C

61

6

20

## FIG 11D

20

FIG 12A

FIG 12B

FIG 13A

FIG 13B

FIG 14 A

FIG 14 B

FIG 15A

FIG 15B

FIG 15C

FIG 15D

## FIG 16A

## FIG 16B

## FIG 17

**EP 3 092 156 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050134022 A1
- DE 102010040119 A1
- WO 2011073445 A1
- DE 60309153